(19) **Europäisches Patentamt**
**European Patent Office**
**Office européen des brevets**

(11) **EP 4 492 322 A1**

(12) **EUROPEAN PATENT APPLICATION**

(43) Date of publication:
**15.01.2025 Bulletin 2025/03**

(21) Application number: **23185476.1**

(22) Date of filing: **14.07.2023**

(51) International Patent Classification (IPC):
**G06T 5/60** $^{(2024.01)}$       **G06T 5/70** $^{(2024.01)}$

(52) Cooperative Patent Classification (CPC):
**G06T 5/70; G06T 5/60;** G06T 2207/10081;
G06T 2207/20008; G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **GRASS, Michael**
**Eindhoven (NL)**
• **SCHNELLBÄCHER, Nikolas David**
**Eindhoven (NL)**
• **NAE, Yael Haya**
**5656AG Eindhoven (NL)**

(74) Representative: **Philips Intellectual Property &
Standards**
**High Tech Campus 52**
**5656 AG Eindhoven (NL)**

(54) **REDUCING NOISE IN COMPUTED TOMOGRAPHY IMAGE SLICES**

(57)    A computer-implemented method of reducing noise in computed tomography, CT, image slices ($110_{1..i}$, $x_i$) through an anatomical region, is provided. The method comprises: receiving CT data (120) representing the image slices ($110_{1..i}$, $x_i$); adjusting an amount of noise in the image slices ($110_{1..i}$, $x_i$) to provide de-noised image slices( $\widehat{x_i}$ ) having a similar amount of noise; and outputting the de-noised image slices( $\widehat{x_i}$ ).

FIG. 7

EP 4 492 322 A1

**Description**

TECHNICAL FIELD

The present disclosure relates to reducing noise in computed tomography, CT, image slices. A computer-implemented method, a computer program product, and a system, are disclosed.

BACKGROUND

CT data is often reconstructed to provide image slices through an anatomical region. The image slices are analyzed in order to perform a diagnosis on a patient. For instance, multi-slice CT images are often analyzed in order to investigate the presence of coronary artery disease.

Various types of CT imaging systems may be used to acquire CT data for reconstruction into image slices. These include so-called "multi-slice" CT imaging systems, as well as older so-called "single-slice" CT imaging systems. Multi-slice CT imaging systems include a detector with a multiple rows of detector pixels. The rows of detector pixels are distributed along the axis of rotation of the CT imaging system, and the pixels in each row are arranged transaxially, or along an arc, with respect to the axis of rotation. CT data that is acquired by rotating an X-ray source and the multiple rows of detector pixels around an anatomical region, is reconstructed to provide multiple transaxial image slices through the anatomical region. Single-slice CT imaging systems include a detector with a single row of detector pixels. CT data that is acquired by rotating an X-ray source and the single row of detector pixels around an anatomical region, is reconstructed to provide a single transaxial image slice through the anatomical region.

Both multi-slice and single-slice CT imaging systems may be operated in a so-called "circular" mode, or in a so-called "step-and-shoot" mode. In the circular mode, a CT imaging system is maintained in the same axial position with respect to the anatomical region during image acquisition. In the step-and-shoot mode, also known as a "sequential" mode, the position of the CT imaging system, or the anatomical region, is stepped along the axis of rotation of the CT imaging system to provide a plurality of discrete positions of the CT imaging system relative to the anatomical region. CT data for the one or more image slices is acquired at each discrete position. The step-and-shoot mode increases the axial extent of the anatomical region for which CT data is acquired.

Both multi-slice and single-slice CT imaging systems may be operated in combination with a gating protocol. For instance, prospective ECG gating may be used time the acquisition of the CT data such that CT data is only acquired during a cardiac phase in which there is minimal movement of the heart. Alternatively, retrospective ECG gating may be used to select portions of continuously-acquired CT data for reconstruction such that the reconstructed CT data corresponds to a cardiac phase in which there is minimal movement of the heart. Such gating protocols reduce the amount of motion-induced blurring in the image slices.

Aside from multi-slice, and single-slice CT imaging systems, other types of CT imaging systems may also be used to acquire CT data for reconstruction into image slices. For instance, so-called helical CT imaging systems generate CT data whilst continuously translating the position of the CT imaging system relative to the anatomical region. The CT data represents a helical section through the anatomical region. The acquired CT data is often interpolated prior to its reconstruction. The interpolated data may then be reconstructed to provide image slices through the anatomical region. In another example, spectral CT imaging systems may be used to acquire spectral CT data for reconstruction into image slices. In yet another example, X-ray projection imaging systems may be used to acquire CT data for reconstruction into image slices. X-ray projection imaging systems typically acquire projection data whilst maintaining an X-ray detector in a static position with respect to anatomical region. However, X-ray projection imaging systems may also acquire projection data whilst rotating their X-ray detector around an anatomical region. The projection data that is acquired from multiple angles around the anatomical region may be referred-to as CT data. X-ray projection imaging systems include a two-dimensional array of detector pixels, and may therefore generate CT data for multiple image slices through the anatomical region by rotating their X-ray detector around the axis of rotation of the X-ray imaging system whilst maintaining the X-ray detector in fixed position along the axis of rotation. X-ray projection imaging systems may also be operated in the step-and-shoot mode described above.

Image noise is inherent in image slices that are generated by all types of CT imaging systems. Image noise presents a challenge when analyzing image slices, particularly in image slices that are acquired in low-dose imaging procedures. Consequently, various image "denoising" methods have been developed. These include spatial domain filtering techniques that employ linear, or non-linear filters, deep learning algorithms, and transform domain filtering techniques such as wavelet-based denoising.

However, there remains room for improvements when reducing noise in CT image slices.

SUMMARY

According to one aspect of the present disclosure, a computer-implemented method of reducing noise in computed tomography, CT, image slices through an anatomical region, is provided. The method includes:

    receiving CT data representing the image slices;

adjusting an amount of noise in the image slices to provide de-noised image slices having a similar amount of noise; and

outputting the de-noised image slices.

The inventors have observed that a drawback of existing de-noising techniques is that they result in image slices that have different amounts of noise. The inventors have determined that this is due to differences in the amount of X-ray attenuation in the image slices. For instance, in a cardiac imaging procedure, image slices are generated through the heart at different positions along the patient's cranial-caudal axis, i.e. along the axis of rotation of the CT imaging system. The slices intercept different parts of the patient's anatomy. For instance, an image slice that intercepts the upper end of the heart may intercept matter such as the aorta, and which has relatively lower X-ray attenuation than an image slice that intercepts the lower end of the heart, and which may intercept matter such as the liver and the diaphragm. These differences in the amount of X-ray attenuation in the image slices give rise to image slices that have different amounts of noise. These differences in the amount of noise present a challenge to a physician interpreting the image slices because they hamper the physician's ability to distinguish real image features from noise. These noise variations are also exacerbated by movements in the position of the patient's organs during the intervals between which the CT data is acquired for the image slices.

In the above method, the amount of noise in the image slices is adjusted in order to provide de-noised image slices having a similar amount of noise. This facilitates a more accurate interpretation of the image slices.

Further aspects, features, and advantages of the present disclosure will become apparent from the following description of examples, which is made with reference to the accompanying drawings.

BRIEF DESCRIPTION OF THE DRAWINGS

Fig. 1 is a flowchart illustrating an example of a computer-implemented method of reducing noise in CT image slices, in accordance with some aspects of the present disclosure.

Fig. 2 is a schematic diagram illustrating an example of a system 200 for reducing noise in CT image slices $110_{1..i}$, $x_i$, in accordance with some aspects of the present disclosure.

Fig. 3 illustrates a first example of the image intensity values in multiple CT image slices $110_{1..i}$ through a heart in accordance with some aspects of the present disclosure.

Fig. 4 illustrates a second example of the image intensity values in multiple CT image slices $110_{1..i}$

through a heart in accordance with some aspects of the present disclosure.

Fig. 5 illustrates a third example of the image intensity values in multiple CT image slices $110_{1..i}$ through a heart in accordance with some aspects of the present disclosure.

Fig. 6 illustrates a fourth example of the image intensity values in multiple CT image slices $110_{1..i}$ through a heart in accordance with some aspects of the present disclosure.

Fig. 7 is a schematic diagram illustrating an example of a method of reducing noise in CT image slices $110_{1..i}$, $x_i$, in accordance with some aspects of the present disclosure.

DETAILED DESCRIPTION

Examples of the present disclosure are provided with reference to the following description and Figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a computer implemented method, may be implemented in a computer program product, and in a system, in a corresponding manner.

In the following description, reference is made to computer-implemented methods of reducing noise in CT image slices through an anatomical region. Reference is made to examples in which the anatomical region is the heart of a patient. However, it is to be appreciated that the methods may alternatively be used to reduce noise in CT image slices through anatomical regions in general, including CT image slices through anatomical regions such as the head, the liver, and so forth.

Reference is also made herein to examples in which CT data is acquired using a CT imaging system. In this regard, it is to be appreciated that the CT data may be generated by various types of imaging systems, including for example so-called multi-slice CT imaging systems, single-slice CT imaging systems, helical CT imaging systems, spectral CT imaging systems, and also X-ray projection imaging systems. It is also noted that the methods disclosed herein may alternatively be used to reduce noise in positron emission tomography "PET", and also single photon emission computed tomography "SPECT", image slices through an anatomical region. Thus, PET and SPECT data representing image slices may be processed in a similar manner to provide de-noised image slices for these types of data.

It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The functions of one or more of the method features may for instance be provided by processors that are shared within a networked processing architecture such as a client/server architecture, a peer-to-peer architecture, the Internet, or the Cloud.

The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid-state memories, magnetic tape, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray™ and DVD.

It is also noted that some operations that are performed in the computer-implemented methods disclosed herein may be implemented using artificial intelligence techniques. Suitable techniques may include machine learning techniques, as well as deep learning techniques such as neural networks. For instance, one or more neural networks, may be trained in a supervised, or in some cases unsupervised, manner, to implement the operations performed in the computer-implemented methods disclosed herein.

As mentioned above, there remains room for improvements when reducing noise in CT image slices.

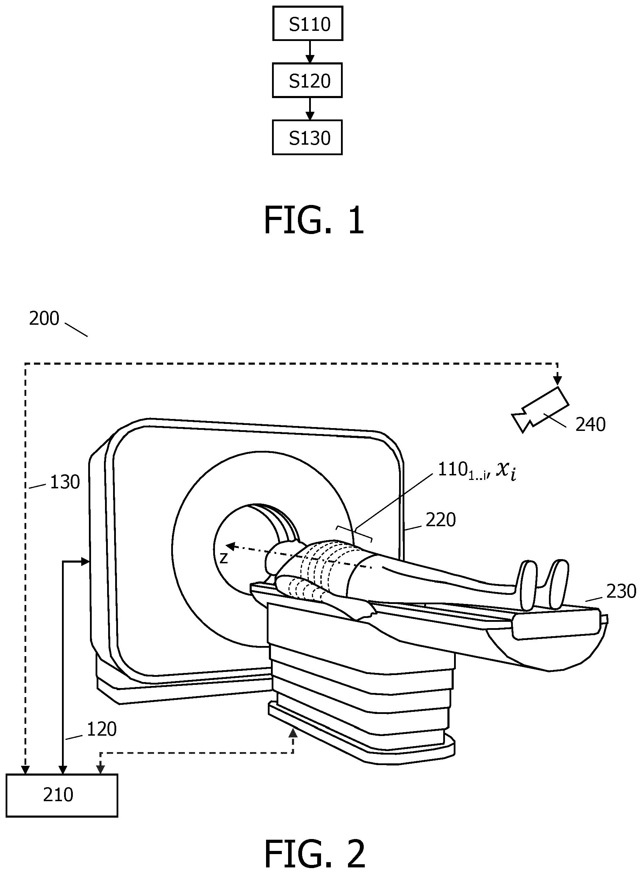

Fig. 1 is a flowchart illustrating an example of a computer-implemented method of reducing noise in CT image slices, in accordance with some aspects of the present disclosure. Fig. 2 is a schematic diagram illustrating an example of a system 200 for reducing noise in CT image slices $110_{1..i}$, $x_i$, in accordance with some aspects of the present disclosure. It is noted that operations described in relation to the method illustrated in the flowchart in Fig. 1, may also be performed by the one or more processors 210 of the system 200 illustrated in Fig. 2. Likewise, operations described in relation to the one or more processors 210 of the system 200, may also be performed in the method described with reference to Fig. 1. With reference to Fig. 1, the computer-implemented method of reducing noise in CT image slices, includes:

receiving S110 CT data 120 representing the image slices $110_{1..i}$, $x_i$;

adjusting S120 an amount of noise in the image slices $110_{1..i}$, $x_i$ to provide de-noised image slices $\widehat{x_i}$ having a similar amount of noise; and

outputting S130 the de-noised image slices $\widehat{x_i}$.

The inventors have observed that a drawback of existing de-noising techniques is that they result in image slices that have different amounts of noise. The inventors have determined that this is due to differences in the amount of X-ray attenuation in the image slices. For instance, in a cardiac imaging procedure, image slices are generated through the heart at different positions along the patient's cranial-caudal axis, i.e. along the axis of rotation of the CT imaging system. The slices intercept different parts of the patient's anatomy. For instance, an image slice that intercepts the upper end of the heart may intercept matter such as the aorta, and which has relatively lower X-ray attenuation than an image slice that intercepts the lower end of the heart, and which may intercept matter such as the liver and the diaphragm. These differences in the amount of X-ray attenuation in the image slices give rise to image slices that have different amounts of noise. These differences in the amount of noise present a challenge to a physician interpreting the image slices because they hamper the physician's ability to distinguish real image features from noise. These noise variations are also exacerbated by movements in the position of the patient's organs during the intervals between which the CT data is acquired for the image slices.

In the above method, the amount of noise in the image slices is adjusted in order to provide de-noised image slices having a similar amount of noise. This facilitates a more accurate interpretation of the image slices.

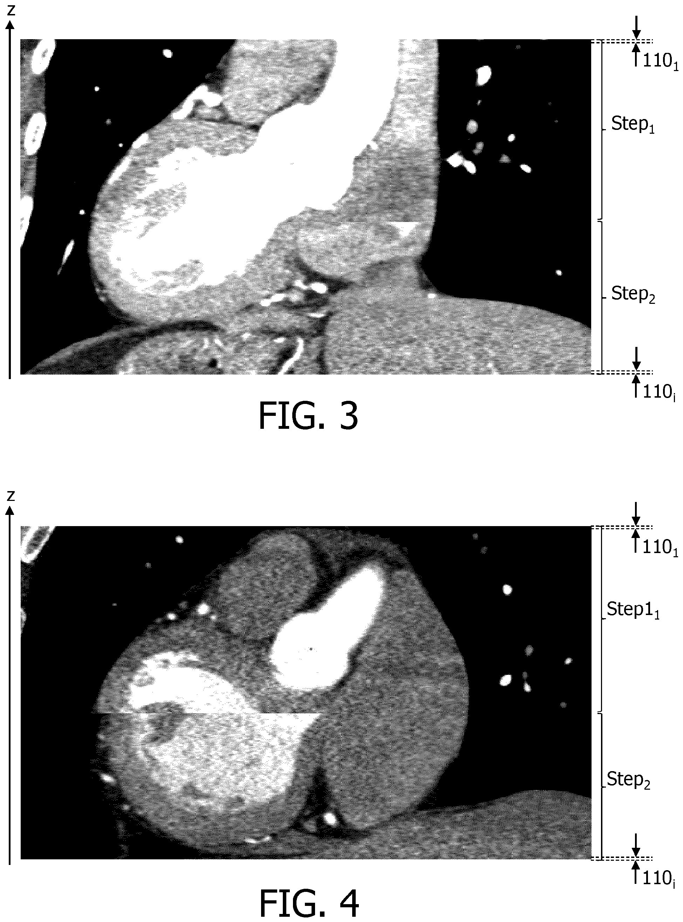

In order to illustrate the issue addressed by the method illustrated in the flowchart in Fig. 1, Fig. 3 illustrates a first example of the image intensity values in multiple CT image slices $110_{1..i}$ through a heart in accordance with some aspects of the present disclosure. The image intensity values in Fig. 3 represent the X-ray attenuation in the image slices $110_{1..i}$ across a coronal plane through the heart. The axis of rotation of the CT imaging system, also known as the z-axis of the imaging system, is illustrated via the symbol z in Fig. 3. The CT image slices $110_{1..i}$ in the illustrated example were acquired in a step-and-shoot mode wherein the CT data for multiple slices is acquired in each of two steps, $Step_1$, and Stepz. With reference to the system 200 illustrated in Fig. 2, the CT data representing the CT image slices $1 10_{1..i}$ illustrated in Fig. 3 was generated by stepping a position of the patient along the axis of rotation, z, of the CT imaging system to provide the positions, $Step_1$, $Step_2$, of the CT imaging system relative to the anatomical region. At each of the discrete positions $Step_1$, and $Step_2$, the CT data is acquired for multiple images slices. The image slices $110_{1..i}$ illustrated in Fig. 3 are generated by reconstructing the acquired CT data for the image slices $110_{1..i}$ and displaying the image intensities in the image slices across a coronal plane. The CT image slices $110_{1..i}$ extend into the plane of the drawing in Fig. 3, and the intensities in each slice represent the X-ray attenuation in the image slice at the depth of the coronal plane. The image slice $110_1$ illustrated in Fig. 3 is generated towards the upper end of the heart and consequently intercepts the aorta. The image slices in the central portion of $Step_2$ intercept the diaphragm, i.e. the curved-shaped boundary extending from the left-hand side of Fig. 3 to the right-hand side of Fig. 3. Lower down in Fig. 3, e.g. in the image slice 110i, the image slices intercept the liver as well as the diaphragm.

As may be appreciated from a close inspection of the image intensities in the image slices illustrated in Fig. 3, the amount of noise varies between image slices. The amount of noise varies between image slices that are generated at each position of the CT imaging system relative to the anatomical region. For instance, the amount of noise in the first image slice $110_1$ in the position $Step_1$ is relatively higher than in the last image slice in the position $Step_1$. The amount of noise also varies between image slices that are generated at different positions of the CT imaging system relative to the anatomical region. For instance, the amount of noise in the first image slice $110_1$ in the position $Step_1$ is relatively higher than in the last image slice 110i in the position Stepz. These noise variations present a challenge to a physician interpreting the image slices because they hamper the physician's ability to distinguish real image features from noise. These noise variations are also exacerbated by movements in the position of the patient's organs during the intervals between which the CT data is acquired for the image slices.

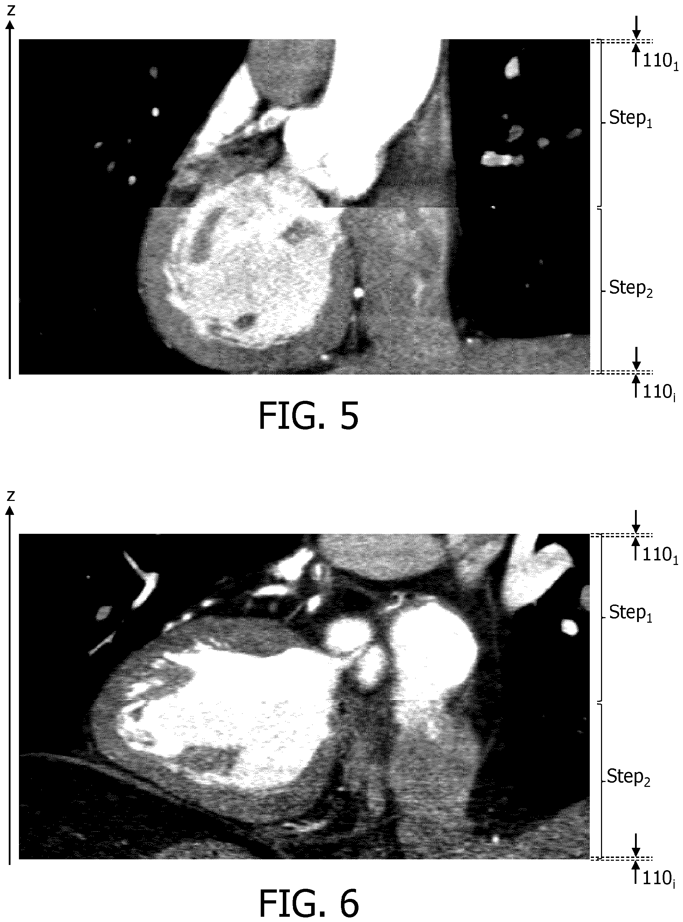

Similar variations in the amount of noise in the image slices may also be observed between the image slices $110_{1..i}$ in the images illustrated in Fig. 4 - Fig. 6. Fig. 4 illustrates a second example of the image intensity values in multiple CT image slices $110_{1..i}$ through a heart in accordance with some aspects of the present disclosure. Fig. 5 illustrates a third example of the image intensity values in multiple CT image slices $110_{1..i}$ through a heart in accordance with some aspects of the present disclosure. Fig. 6 illustrates a fourth example of the image intensity values in multiple CT image slices $110_{1..i}$ through a heart in accordance with some aspects of the present disclosure. As compared to the image slices $110_{1..i}$ illustrated in Fig. 3, the CT image slices $110_{1..i}$ in the examples illustrated in Fig. 4 - Fig. 6 are generated at different locations of the coronal plane. As in the image illustrated in Fig. 3, the amount of noise in the images illustrated in Fig. 4 - Fig. 6 also varies between the image slices that are generated at each position of the imaging system relative to the anatomical region. For instance, the amount of noise in the first image slice $110_1$ in the position $Step_1$ in these images is relatively higher than the amount of noise in the last image slice in the position $Step_1$. The amount of noise also varies between image slices that are generated at different positions of the imaging system relative to the anatomical region. For instance, the amount of noise in the first image slice $110_1$ in the position $Step_1$ is relatively higher than the amount of noise in the last image slice 110i in the position $Step_2$.

The inventors have determined that these variations are due to differences in the amount of X-ray attenuation in the image slices.

Returning to the method illustrated in the flowchart in Fig. 1, in the operation S110, CT data 120 representing the image slices $110_{1..i}$, is received.

In general, the CT data 120 that is received in the operation S110 may be raw data, i.e. data that has not yet been reconstructed into a volumetric, or 3D, image, or it may be reconstructed image data, i.e. data that has already been reconstructed into a volumetric image. The CT data may represent complete image slice(s) through the anatomical region, or alternatively the CT data may represent portions of image slice(s) through the anatomical region. In the latter case, the CT data may for instance represent only a central portion of the field of view of the CT imaging system that encompasses the heart. This obviates the need to process the CT data for the entire image slice. The CT data may also be referred-to as volumetric data. The CT data 120 that is received in the operation S110 may be generated by a CT imaging system, or, as described in more below, it may be generated by rotating, or stepping the X-ray source and X-ray detector of an X-ray projection imaging system around the anatomical region.

A CT imaging system generates CT data by rotating, or stepping, an X-ray source-detector arrangement around an anatomical region and acquiring X-ray attenuation data for the anatomical region from multiple rotational angles with respect to the anatomical region. The CT data may then be reconstructed into a 3D image of the anatomical region. Examples of CT imaging systems that may be used to generate the CT data 120 include cone beam CT imaging systems, photon counting CT imaging systems, dark-field CT imaging systems, and phase contrast CT imaging systems. An example of a CT imaging system 220 that may be used to generate the CT data 120 that is received in the operation S 110, is illustrated in Fig. 2. As described above, the CT imaging system may be a multi-slice CT imaging system, or a single-slice CT imaging system. The CT imaging system may be operated in a circular mode, or in a step-and-shoot mode, or in a helical mode. By way of an example, the CT data 120 may be generated by the CT 5000 Ingenuity CT scanner that is marketed by Philips Healthcare, Best, The Netherlands.

As mentioned above, the CT data 120 that is received in the operation S 110 may alternatively be generated by rotating, or stepping the X-ray source and X-ray detector of an X-ray projection imaging system around an anatomical region. An X-ray projection imaging system may include a support arm such as a so-called "C-arm" that supports an X-ray source and an X-ray detector. X-ray projection imaging systems may alternatively include a support arm with a different shape to this example, such as an O-arm, for example. Other types of X-ray projection imaging systems may alternatively be used wherein the X-ray source and the X-ray detector are mounted, or supported, in a different manner. In contrast to a CT imaging system, an X-ray projection imaging system typically generates X-ray attenuation data for an anatomical region with the X-ray source and X-ray detector in a static position with respect to the anatomical region. The X-ray attenuation data may be referred-to as projection data, in contrast to the volumetric data that is generated by a CT imaging system. The X-ray attenuation data that is generated by an X-ray projection imaging system is typically used to generate a 2D image of the anatomical region. However, an X-ray projection imaging system may generate CT data, i.e. volumetric data, by rotating, or stepping, its X-ray source and X-ray detector around an anatomical region and acquiring projection data for the anatomical region from multiple rotational angles with respect to the anatomical region. Image reconstruction techniques may then be used to reconstruct the projection data that is obtained from the multiple rotational angles into a volumetric image in a similar manner to the reconstruction of a volumetric image using X-ray attenuation data that is acquired from a CT imaging system. Thus, the CT data 120 that is received in the operation S110, may be generated by a CT imaging system, or alternatively, it may be generated by an X-ray projection imaging system. An example of an X-ray projection imaging system that may be used to generate the CT data 120, is the Azurion 7 X-ray projection imaging system that is marketed by Philips Healthcare, Best, The Netherlands.

In some examples that are described in more detail below, the CT data 120 that is received in the operation S 110 includes spectral CT data. Spectral CT data defines X-ray attenuation in an anatomical region within each of a plurality of different energy intervals $DE_{1..m}$. In general there may be two or more energy intervals; i.e. $m$ is an integer, and $m \geq 2$. In this regard, the spectral CT data 120 that is received in the operation S 110 may be generated by a spectral CT imaging system, or by a spectral X-ray projection imaging system. In the latter case, the spectral CT data may be acquired by rotating, or stepping the X-ray source and X-ray detector of the spectral X-ray projection imaging system around the anatomical region, as described above. More generally, the spectral CT data 120 that is received in the operation S 110 may be generated by a spectral X-ray imaging system.

The ability to generate X-ray attenuation data at multiple different energy intervals distinguishes a spectral X-ray imaging system from a conventional X-ray imaging system. By processing the data from the multiple different energy intervals, a distinction can be made between media that have similar X-ray attenuation values when measured within a single energy interval, and which would be indistinguishable in conventional X-ray attenuation data. Examples of spectral X-ray imaging systems that may be used to generate spectral CT data 120 that is received in the operation S 110 include cone beam spectral X-ray imaging systems, photon counting spectral X-ray imaging systems, dark-field spectral X-ray imaging systems, and phase contrast spectral X-ray imaging systems. An example of a spectral CT imaging system that may be used to generate spectral CT data 120 that is received in the operation S 110 is the Spectral CT 7500 that is marketed by Philips Healthcare, Best, The Netherlands.

In general, spectral CT data 120 may be generated by various different configurations of spectral X-ray imaging systems that include an X-ray source and an X-ray detector. For instance, the X-ray source of a spectral X-ray imaging system may include multiple monochromatic sources, or one or more polychromatic sources, and the X-ray detector of a spectral X-ray imaging system may include: a common detector for detecting multiple different X-ray energy intervals, or multiple detectors wherein each detector detects a different X-ray energy interval $DE_{1..m}$, or a multi-layer detector in which X-rays having energies within different X-ray energy intervals are detected by corresponding layers, or a photon counting detector that bins detected X-ray photons into one of multiple energy intervals based on their individual energies. Other combinations of the aforementioned X-ray sources and detectors may also be used to provide the spectral CT data 120. For example, in one configuration, X-ray source-detector pairs are mounted to a gantry at rotationally-offset positions around an axis of rotation. In this configuration, each source-detector pair operates independently, obviating the need to sequentially switch different X-ray sources emitting X-rays at different energy intervals.

In general, the CT data 120 that is received in the operation S 110 may be received via any form of data communication, including wired, optical, and wireless communication. By way of some examples, when wired or optical communication is used, the communication may take place via signals transmitted on an electrical or optical cable, and when wireless communication is used, the communication may for example be via RF or optical signals. The CT data 120 that is received in the operation S 110 may be received from various sources. For example, the CT data 120 may be received from an imaging system, such as one of the imaging systems described above. Alternatively, the CT data 120 may be received from another source, such as a computer readable storage medium, the Internet, or the Cloud, for example.

Returning to the method illustrated in the flowchart in Fig. 1, in the operation S 120, the amount of noise in the image slices $110_{1..i}$ is adjusted in order to provide de-noised image slices $\widehat{x_i}$ having a similar amount of noise. In general, the adjusting operation S120 may include adjusting the magnitude of the noise in the image slices such that the de-noised image slices $\widehat{x_i}$ have a similar magnitude of noise. The adjusting operation S120 may be performed by adjusting the magnitude of the noise whilst maintaining the same two-dimensional distribution of noise in each image slice. The magnitude of the noise in the de-noised image slices may be within a range of approximately $\pm 5$ %, or approximately $\pm 10$ %, or approximately $\pm 20$ %, for example. The adjusting operation S 120 may be performed so as to maintain the shape of the noise power spectrum in each image slice. Various techniques for performing the adjusting operation S 120 are described below. In some of these techniques, the amount of noise in each of the image slices $110_{1..i}$ is adjusted based on the amount of X-ray attenuation in the image slice. In another approach, the amount of noise in each of the image slices $110_{1..i}$ is adjusted based on the amount of noise in the image slice. In some techniques, the amount of noise is adjusted in the raw CT data, and in other techniques the amount of noise is adjusted in the reconstructed CT image slices.

In the operation S130, the de-noised image slices are outputted. In this operation, the de-noised image slices may be outputted to a display such as a monitor, or outputted in a different manner, such as to a printer, or to a computer readable storage medium, for example.

The result of the operations described with reference to Fig. 3 is to provide de-noised image slices having a similar amount of noise. This facilitates a more accurate interpretation of the image slices.

As mentioned above, various techniques for performing the adjusting operation S120 are contemplated. In one example, the operation of adjusting S 120 an amount of noise in the image slices $110_{1..i}$, $x_i$ comprises:

for each of the image slices $110_{1..i}$, $x_i$:

estimating a noise distribution in the image slice $r_i$;

applying a scaling factor $\alpha_i$ to the estimated noise distribution in the image slice to provide a scaled noise distribution $\alpha_i \cdot r_i$ in the image slice;

subtracting from the image slice, the scaled noise distribution $\alpha_i \cdot r_i$ in the image slice to provide a de-noised image slice $\widehat{x_i}$; and

wherein the scaling factor $\alpha_i$ for each image slice is chosen to provide de-noised image slices having a similar amount of noise.

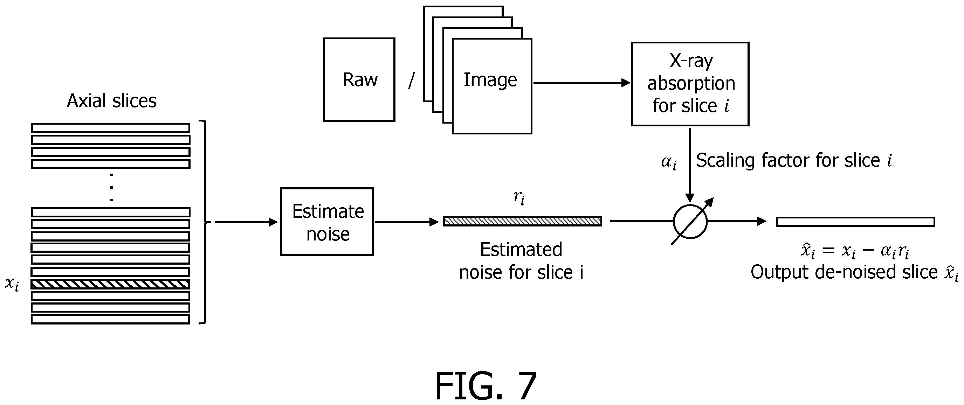

These operations are described with reference to Fig. 7, which is a schematic diagram illustrating an example of a method of reducing noise in CT image slices $110_{1..i}$, $x_i$, in accordance with some aspects of the present disclosure. On the left-hand side of Fig. 7, image slices $x_i$ are illustrated. Following the arrow towards the right-hand side of Fig. 7, the noise $r_i$ is then estimated for each image slice $x_i$. A scaling factor $\alpha_i$ is then applied to the estimated noise distribution in each image slice to provide a scaled noise distribution $\alpha_i \cdot r_i$ in the image slice. The scaling factor $\alpha_i$ for each image slice is chosen to provide de-noised image slices having a similar amount of noise. It is noted that in some cases the scaling factor $\alpha_i$ may have a positive value, in some cases the scaling factor may have a value of zero, and in some cases the scaling factor may have a negative value. In the example illustrated in Fig. 7, the scaling factor $\alpha_i$ for each image slice is calculated based on an amount of X-ray attenuation in the image slice. The scaling factor may for instance be proportional to the average X-ray attenuation in the image slice.

Various techniques for calculating the amount of X-ray attenuation in each image slice are contemplated. For instance, the amount of X-ray attenuation may be calculated from the raw CT data 120, or from a reconstructed image slice, as illustrated in Fig. 7. The amount of X-ray attenuation may alternatively be estimated from camera image data, as described in more detail below.

In one example, the amount of X-ray attenuation in each image slice is calculated by:

reconstructing the CT data 120 representing the image slice; and
calculating an average X-ray attenuation in the reconstructed image slice;

In another example, the amount of X-ray attenuation in each image slice is calculated by:
estimating the X-ray attenuation in the image slice from raw CT data 120 representing the image slice;

In another example, the amount of X-ray attenuation in each image slice is calculated by:

reconstructing the received CT data 120 to provide a reconstructed volumetric CT image representing the image slices; and

calculating, from the reconstructed volumetric CT image, an average amount of X-ray attenuation in each image slice;

In another example, the amount of X-ray attenuation in each image slice is calculated by:

receiving second CT data 120 representing the anatomical region;
reconstructing the second CT data 120 to provide a second reconstructed volumetric CT image; and
calculating, from the second reconstructed volumetric CT image, an average amount of X-ray attenuation in image slices corresponding to the image slices in the received CT data 120.

In this example, the second reconstructed volumetric CT image may be a surview CT image representing the anatomical region, also known as a scout scan. The second CT data may comprise a relatively lower spatial resolution than the CT data 120. Thus, the reconstructed surview image may have a relatively lower spatial resolution than the image slices that are reconstructed from the CT data. Alternatively, the second CT data may comprise the same spatial resolution as the CT data 120 and the second CT data may be spatially binned to a relatively lower spatial resolution prior to its reconstruction, thereby providing a reconstructed surview image that has a relatively lower spatial resolution than the image slices that are reconstructed from the CT data. Alternatively, the second CT data may be provided from a previous imaging procedure on the anatomical region.

In another example, the amount of X-ray attenuation in each image slice is calculated by:

receiving camera image data 130 representing the anatomical region; and
estimating an average amount of X-ray attenuation in the images slice using the camera image data 130.

In this example, the camera image data 130 may be provided by a camera 240 configured to view the anatomical region, as illustrated in Fig. 2 The camera may be a visible camera, or a depth camera. The average amount of X-ray attenuation in each image slice may be estimated using the camera image data 130 by: fitting an anatomical model representing the anatomical region to the camera image data, wherein the anatomical model comprises X-ray attenuation values representing one or more anatomical regions; determining a position of the image slices in the anatomical model, e.g. by registering the position of the CT imaging system to the anatomical model; and determining the average amount of X-ray attenuation in each image slice from the X-ray attenuation values in the anatomical model.

In another example, the X-ray attenuation in each image slice may be calculated using the techniques described above, and a smoothing function may also be applied to the values of the X-ray attenuation in the image slices. The scaling factor $\alpha_i$ for each image slice is then calculated using the smoothed values for the amount of X-ray attenuation in the image slices. This helps to reduce the potential for anomalous transitions in the amounts of noise between the image slices.

Finally, on the right-hand side of Fig. 7, the de-noised image slices $\widehat{x_i}$ are generated by subtracting from each image slice $x_i$, the scaled noise distribution $\alpha_i \cdot r_i$ in the image slice. The de-noised image slices $\widehat{x_i}$ are then outputted.

In an alternative approach, rather than determining the scaling factor $\alpha_i$ for each image slice based on the amount of X-ray attenuation in the image slice, the scaling factor $\alpha_i$ for each image slice may be calculated based on the amount of noise in each image slice. Thus, in one example, the scaling factor $\alpha_i$ for each image slice is determined by:

reconstructing the received CT data 120 representing the image slices to provide one or more reconstructed CT images representing the image slices;
calculating, from the one or more reconstructed CT images, an amount of noise in each image slice; and
setting the scaling factor for each image slice based on the amount of noise in the image slice.

In this example, a single volumetric CT image may be reconstructed from the CT data 120 and the amount of noise determined in positions corresponding to the image slices. Alternatively, individual image slices may be reconstructed from the CT data 120, and the amount of noise determined in each image slice.

With reference to the example illustrated in Fig. 7, various techniques are contemplated for the operation of estimating the noise distribution in the image slices, i.e. the value of the parameter $r_i$. In one example, the operation of estimating a noise distribution in the image slice, comprises:

inputting the image slice $110_{1..i}$, $x_i$ into a neural network; and
generating the estimated noise distribution $r_i$ for the image slice $110_{1..i}$, $x_i$ in response to the inputting; and wherein the neural network is trained to generate the estimated noise distribution for the image slice using training data comprising a plurality of image slices, and ground truth data comprising for each image slice in the training data, a corresponding estimated noise distribution for the image slice.

In this example, the neural network is trained to generate the estimated noise distribution for the image slice, by:

for each image slice in the training data:

inputting the image slice into the neural network; generating an estimated noise distribution for the image slice using the neural network; and adjusting parameters of the neural network based on a difference between the estimated noise distribution for the image slice generated by the neural network, and the corresponding estimated noise distribution for the image slice from the ground truth data; and repeating the inputting, the generating, and the adjusting, until a stopping criterion is met.

In this example, the neural network may be provided by various architectures, such as for example a convolutional neural network, "CNN", a recurrent neural network "RNN", or a transformer, and so forth. As describe above, the process of training the neural network includes adjusting its parameters. The parameters, or more particularly the weights and biases, control the operation of activation functions in the neural network. In supervised learning, the training process automatically adjusts the weights and the biases, such that when presented with the input data, the neural network accurately provides the corresponding expected output data. In order to do this, the value of the loss functions, or errors, are computed based on a difference between predicted output data and the expected output data. The value of the loss function may be computed using functions such as the negative log-likelihood loss, the mean absolute error (or L1 norm), the mean squared error, the root mean squared error (or L2 norm), the Huber loss, or the (binary) cross entropy loss. During training, the value of the loss function is typically minimized, and training is terminated when the value of the loss function satisfies a stopping criterion. Sometimes, training is terminated when the value of the loss function satisfies one or more of multiple criteria.

Various methods are known for solving the loss minimization problem such as gradient descent, Quasi-Newton methods, and so forth. Various algorithms have been developed to implement these methods and their variants including but not limited to Stochastic Gradient Descent "SGD", batch gradient descent, mini-batch gradient descent, Gauss-Newton, Levenberg Marquardt, Momentum, Adam, Nadam, Adagrad, Adadelta, RMSProp, and Adamax "optimizers" These algorithms compute the derivative of the loss function with respect to the model parameters using the chain rule. This process is called backpropagation since derivatives are computed starting at the last layer or output layer, moving toward the first layer or input layer. These derivatives inform the algorithm how the model parameters must be adjusted in order to minimize the error function. That is, adjustments to model parameters are made starting from the output layer and working backwards in the network until the input layer is reached. In a first training iteration, the initial weights and biases are often randomized. The neural network then predicts the output data, which is likewise, random. Backpropagation is then used to adjust the weights and the biases. The training process is performed iteratively by making adjustments to the weights and biases in each iteration. Training is terminated when the error, or difference between the predicted output data and the expected output data, is within an acceptable range for the training data, or for some validation data. Subsequently the neural network may be deployed, and the trained neural network makes predictions on new input data using the trained values of its parameters. If the training process was successful, the trained neural network accurately predicts the expected output data from the new input data.

In an alternative technique, the operation of estimating a noise distribution in the image slice, comprises:

for each of the image slices $110_{1..i}$, $x_i$:

applying a noise filter to the image slice; and subtracting image intensity values in the filtered image slice from the corresponding image intensity values in the image slice to provide the estimated noise distribution in the image slice.

In this example, the noise filter may employ a technique such as total variation de-noising, non-local means "NLM" denoising, block-matching 3D "BLM3D" denoising, or an iterative technique such as the Rudin-Osher-Fatemi "ROF" model, or the Bregman algorithm.

Returning to the method illustrated in the flowchart in Fig. 1, in another example, the operation of adjusting S 120 an amount of noise in the image slices comprises:

applying a noise filter to the received CT data 120, and wherein the noise filter is configured to provide the denoised image slices having a similar amount of noise.

Thus, in this example the noise filter directly provides the de-noised image slices, rather than obtaining the de-noised image slices by subtracting a scaled noise distribution $\alpha_i \cdot r_i$ from each image slice, as was described above with reference to Fig. 7. In this example, the de-noised image slices may be provided using techniques such as total variation de-noising, non-local means "NLM" denoising, block-matching 3D "BLM3D" denoising, or an iterative technique such as the Rudin-Osher-Fatemi "ROF" model, or the Bregman algorithm.

As described above, the CT data 120 used to perform the operations described above may be acquired by operating a CT imaging system in various modes. These include the so-called step-and shoot mode. Thus, in one example, the CT data 120 is generated by stepping a position of a CT imaging system 220, or the anatomical region, along an axis of rotation A - A' of the CT imaging system to provide a plurality of discrete positions of the CT imaging system relative to the anatomical region. In this example, the CT data 120 for one or more of the image slices $110_{1..i}$, $x_i$ is acquired at each discrete position.

When the CT data 120 is acquired in the step-and-shoot mode described above, the X-ray dose used to acquire the CT data 120 for the one or more image slices $110_{1..i}$, $x_i$ at each discrete position, may also be adjusted based on the estimated amount of X-ray attenuation in the one or more image slices $110_{1..i}$, $x_i$ at the discrete position. The X-ray dose may be adjusted based on the average amount of X-ray attenuation in the one or more image slices $110_{1..i}$, $x_i$ at the discrete position. By way of an example, the X-ray dose may be adjusted in proportion with the average amount of X-ray attenuation in the one or more image slices $110_{1..i}$, $x_i$ at the discrete position. Consequently, a relatively higher X-ray dose is used during acquisition of the CT data 120 in discrete positions in which there is relatively higher X-ray attenuation, than in discrete positions in which there is relatively lower X-ray attenuation. This helps to reduce differences in the amount of noise in the image(s) acquired at each discrete position, alleviating the burden of the de-noising method described above. This adjustment of the X-ray dose contrasts with known step-and-shoot imaging procedures, and wherein the X-ray dose, as determined by e.g. the exposure time, the X-ray tube voltage and the X-ray tube current, is set to the same level for all of the steps in the imaging procedure. The X-ray dose is typically set based on factors such as the patient's weight and shape.

In this example, the amount of X-ray attenuation in the one or more image slices $110_{1..i}$, $x_i$ at each discrete position may be estimated using techniques similar to those described above, such as by:

   receiving second CT data 120 representing the anatomical region;
   reconstructing the second CT data 120 to provide a second reconstructed volumetric CT image; and
   calculating, from the second reconstructed volumetric CT image, an average amount of X-ray attenuation in a volumetric region corresponding to the one or more image slices $110_{1..i}$, $x_i$ at the discrete position.

Alternatively, in another example, the amount of X-ray attenuation in the one or more image slices $110_{1..i}$, $x_i$ at the discrete position may be estimated by:

   receiving camera image data 130 representing the anatomical region; and
   estimating an average amount of X-ray attenuation in the one or more image slices $110_{1..i}$, $x_i$ at the discrete position using the camera image data 130.

When the CT data 120 is acquired in the step-and-shoot mode described above, the X-ray dose used to acquire the CT data 120 for the one or more image slices $110_{1..i}$, $x_i$ at each discrete position, may alternatively be adjusted based on the estimated amount of noise in the one or more image slices $110_{1..i}$, $x_i$ at the discrete position. In this case, the amount of noise in the one or more image slices $110_{1..i}$, $x_i$ at each discrete position, may be estimated by:

   receiving second CT data 120 representing the anatomical region;
   reconstructing the second CT data 120 to provide a second volumetric reconstructed CT image; and
   calculating, from the second reconstructed volumetric CT image, an average amount of noise in a volumetric region corresponding to the one or more image slices $110_{1..i}$, $x_i$ at the discrete position.

Alternatively, the amount of X-ray attenuation in the one or more image slices $110_{1..i}$, $x_i$ at the discrete position may be estimated by:

   receiving camera image data 130 representing the anatomical region; and
   estimating an average amount of X-ray attenuation in each image slice using the camera image data 130.

In another example, a computer program product is provided. The computer program product comprises instructions which when executed by one or more processors 210, cause the one or more processors to carry out a method of reducing noise in computed tomography, CT, image slices $110_{1..i}$, $x_i$ through an anatomical region. The method comprises:

   receiving S 110 CT data 120 representing the image slices $110_{1..i}$, $x_i$;
   adjusting S120 an amount of noise in the image slices $110_{1..i}$, $x_i$ to provide de-noised image slices $\widehat{x_i}$ having a similar amount of noise; and
   outputting S130 the de-noised image slices $\widehat{x_i}$.

In another example, a system 200 for reducing noise in computed tomography, CT, image slices $110_{1..i}$, $x_i$ through an anatomical region, is provided. The system comprises one or more processors 210 configured to:

   receive S110 CT data 120 representing the image slices $110_{1..i}$, $x_i$;
   adjust S 120 an amount of noise in the image slices $110_{1..i}$, $x_i$ to provide de-noised image slices $\widehat{x_i}$ having a similar amount of noise; and
   output S130 the de-noised image slices $\widehat{x_i}$.

An example of the system 200 is illustrated in Fig. 2. It is noted that the system 200 may also include one or more of: an imaging system 220 for generating the CT data 120 that is received in the operation S 110, such as for example the CT imaging system 220 illustrated in Fig. 4; a patient bed 230 for supporting a patient and/or stepping a position of the patient along the axis of rotation, z, of the CT imaging system 220; a camera 240 for acquiring the camera image data 130; a display (not illustrated in Fig. 2) for displaying data outputted by the one or more processors 210, such as the image slices $110_{1..i}$, the de-noised image slices, and so forth; and a user input device configured to receive user input, such as a keyboard, a mouse, a touchscreen, and so forth.

The above examples are to be understood as illustrative of the present disclosure, and not restrictive. Further examples are also contemplated. For instance, the examples described in relation to computer-implemented methods, may also be provided by the computer program product, or by the computer-readable storage medium, or by the system, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

**Claims**

1. A computer-implemented method of reducing noise in computed tomography, CT, image slices ($110_{1..i}$, $x_i$) through an anatomical region, the method comprising:

   receiving (S110) CT data (120) representing the image slices ($110_{1..i}$, $x_i$);
   adjusting (S120) an amount of noise in the image slices ($110_{1..i}$, $x_i$) to provide de-noised image slices ( $\widehat{x_i}$ ) having a similar amount of noise; and
   outputting (S130) the de-noised image slices ( $\widehat{x_i}$ ).

2. The computer-implemented method according to claim 1, wherein the adjusting (S120) an amount of noise in the image slices ($110_{1..i}$, $x_i$) comprises:
   for each of the image slices ($110_{1..i}$, $x_i$):

   estimating a noise distribution in the image slice ($r_i$);

   applying a scaling factor ($\alpha_i$) to the estimated noise distribution in the image slice to provide a scaled noise distribution ($\alpha_i \cdot r_i$) in the image slice;
   subtracting from the image slice, the scaled noise distribution ($\alpha_i \cdot r_i$) in the image slice to provide a de-noised image slice ( $\widehat{x_i}$ ); and
   wherein the scaling factor ($\alpha_i$) for each image slice is chosen to provide de-noised image slices having a similar amount of noise.

3. The computer-implemented method according to claim 2, wherein the estimating a noise distribution in the image slice, comprises:

   inputting the image slice ($110_{1..i}$, $x_i$) into a neural network; and
   generating the estimated noise distribution ($r_i$) for the image slice ($110_{1..i}$, $x_i$) in response to the inputting; and
   wherein the neural network is trained to generate the estimated noise distribution for the image slice using training data comprising a plurality of image slices, and ground truth data comprising for each image slice in the training data, a corresponding estimated noise distribution for the image slice.

4. The computer-implemented method according to claim 3, wherein the neural network is trained to generate the estimated noise distribution for the image slice, by:
   for each image slice in the training data:

   inputting the image slice into the neural network;
   generating an estimated noise distribution for the image slice using the neural network; and
   adjusting parameters of the neural network based on a difference between the estimated noise distribution for the image slice generated by the neural network, and the corresponding estimated noise distribution for the image slice from the ground truth data; and
   repeating the inputting, the generating, and the adjusting, until a stopping criterion is met.

5. The computer-implemented method according to claim 2, wherein the estimating a noise distribution in the image slice, comprises:
   for each of the image slices ($110_{1..i}$, $x_i$):

   applying a noise filter to the image slice; and
   subtracting image intensity values in the filtered image slice from the corresponding image intensity values in the image slice to provide the estimated noise distribution in the image slice.

**6.** The computer-implemented method according to any one of claims 2-5, wherein the scaling factor ($\alpha_i$) for each image slice is calculated based on an amount of X-ray attenuation in the image slice.

**7.** The computer-implemented method according to claim 6, wherein the amount of X-ray attenuation in each image slice is calculated by one of:

reconstructing the CT data (120) representing the image slice; and
calculating an average X-ray attenuation in the reconstructed image slice; or
estimating the X-ray attenuation in the image slice from raw CT data (120) representing the image slice;
or
reconstructing the received CT data (120) to provide a reconstructed volumetric CT image representing the image slices; and
calculating, from the reconstructed volumetric CT image, an average amount of X-ray attenuation in each image slice;
or
receiving second CT data (120) representing the anatomical region;
reconstructing the second CT data (120) to provide a second reconstructed volumetric CT image; and
calculating, from the second reconstructed volumetric CT image, an average amount of X-ray attenuation in image slices corresponding to the image slices in the received CT data (120);
or
receiving camera image data (130) representing the anatomical region; and
estimating an average amount of X-ray attenuation in the image slices using the camera image data (130).

**8.** The computer-implemented method according to claim 2, wherein the scaling factor ($\alpha_i$) for each image slice is determined by:

reconstructing the received CT data (120) representing the image slices to provide one or more reconstructed CT images representing the image slices;
calculating, from the one or more reconstructed CT images, an amount of noise in each image slice; and
setting the scaling factor for each image slice based on the amount of noise in the image slice.

**9.** The computer-implemented method according to claim 1, wherein the adjusting (S120) an amount of noise in the image slices comprises:
applying a noise filter to the received CT data (120),

and wherein the noise filter is configured to provide the de-noised image slices having a similar amount of noise.

**10.** The computer-implemented method according to any previous claim, wherein the anatomical region comprises a heart of a subject, or a head of a subject, or a liver of a patient.

**11.** The computer-implemented method according to any previous claim, wherein the CT data (120) comprises spectral CT data defining X-ray attenuation in the anatomical region within each of a plurality of different energy intervals.

**12.** The computer-implemented method according to any previous claim, wherein the CT data (120) is generated by stepping a position of a CT imaging system (220), or the anatomical region, along an axis of rotation (A - A') of the CT imaging system to provide a plurality of discrete positions of the CT imaging system relative to the anatomical region, and acquiring at each discrete position the CT data (120) for one or more of the image slices ($110_{1..i}$, $x_i$).

**13.** The computer-implemented method according to any previous claim, wherein de-noised image slices ( $\widehat{x_i}$ ) have a similar magnitude of noise.

**14.** A computer program product comprising instructions which when executed by one or more processors (210), cause the one or more processors to carry out the method according to any one of claims 1 - 13.

**15.** A system (200) for reducing noise in computed tomography, CT, image slices ($110_{1..i}$, $x_i$) through an anatomical region, the system comprising one or more processors (210) configured to:

receive (S110) CT data (120) representing the image slices ($110_{1..i}$, $x_i$);
adjust (S120) an amount of noise in the image slices ($110_{1..i}$, $x_i$) to provide de-noised image slices ( $\widehat{x_i}$ ) having a similar amount of noise; and

output (S130) the de-noised image slices ( $\widehat{x_i}$ ).

S110

S120

S130

# FIG. 1

200

240

$110_{1..i}, x_i$

220

130

z

120

210

230

# FIG. 2

FIG. 3

FIG. 4

FIG. 5

FIG. 6

Axial slices

Raw $/$ Image

X-ray absorption for slice $i$

$\alpha_i$ Scaling factor for slice $i$

Estimate noise

$r_i$

Estimated noise for slice i

$x_i$

$\hat{x}_i = x_i - \alpha_i r_i$
Output de-noised slice $\hat{x}_i$

FIG. 7

| Europäisches Patentamt European Patent Office Office européen des brevets | **EUROPEAN SEARCH REPORT** | Application Number EP 23 18 5476 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/311507 A1 (HASEGAWA AKIRA [US]) 10 October 2019 (2019-10-10) | 1,2,5-15 | INV. G06T5/60 |
| Y | * abstract * * paragraph [0028] * * paragraph [0034] * * paragraph [0040] * * figures 2,4A * | 3,4 | G06T5/70 |
| Y | MA YINJIN ET AL: "Low-Dose CT Image Denoising Using a Generative Adversarial Network With a Hybrid Loss Function for Noise Learning", IEEE ACCESS, IEEE, USA, vol. 8, 7 April 2020 (2020-04-07), pages 67519-67529, XP011784329, DOI: 10.1109/ACCESS.2020.2986388 [retrieved on 2020-04-17] | 3,4 | |
| A | * abstract * | 1,2,5-15 | |

TECHNICAL FIELDS SEARCHED (IPC)

G06T

The present search report has been drawn up for all claims

| Place of search | Date of completion of the search | Examiner |
|---|---|---|
| Munich | 16 January 2024 | Millet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 5476

This annex lists the patent family members relating to the patent documents cited in  the above-mentioned European search report.
The members are as contained in the European Patent Office EDP file on
The European Patent Office is in no way liable for these particulars which are merely given for the purpose of information.

16-01-2024

| Patent document cited in search report | Publication date | Patent family member(s) | Publication date |
|---|---|---|---|
| US 2019311507 A1 | 10-10-2019 | US 2019311507 A1 | 10-10-2019 |
| | | WO 2019195713 A1 | 10-10-2019 |

EPO FORM P0459

For more details about this annex : see Official Journal of the European Patent Office, No. 12/82